# EUROPEAN PATENT SPECIFICATION

(11) **EP 2 246 540 B1**
(45) Date of publication and mention of the grant of the patent: **21.12.2011**
(21) Application number: 10275043.7
(22) Date of filing: 16.04.2010
(51) Int. Cl.: F01N 5/04, F01D 1/02

(54) **Vehicle power generation system using exhaust gas**
Stromerzeugungssystem für Fahrzeug mittels Abgas
Système générateur de puissance de véhicule utilisant le gaz d'échappement

(30) Priority: 21.04.2009 KR 20090034530
(43) Date of publication of application: 03.11.2010
(73) Proprietor: Hwang, Boo-Sung, Kyung-ki do (KR)
(72) Inventor: Hwang, Boo-Sung, Kyung-ki do (KR)
(74) Representative: Hocking, Adrian Niall

(56) References cited:
- GB-A- 187 492
- JP-A- 58 190 511
- US-B1- 6 434 936

## Description

### TECHNICAL FIELD

The present invention relates to a vehicle power generation system using exhaust gas, and in particular to a vehicle power generation system using exhaust gas which generates electric power used for electrolysis as the system is used in a vehicle which uses a mixed gas of hydrogen and oxygen.

### BACKGROUND ART

A hydrogen-oxygen mixed gas generation apparatus is constituted to generate hydrogen and oxygen which are obtained as water is electrolysis-treated. The above apparatus generates a mixed gas of hydrogen and oxygen which is a non-pollution energy source by supplying water mixed with a small amount of electrolyte into an electrolysis tank equipped with a positive (+) electrode and a negative (-) electrode and applying a DC voltage thereto.

At this time, the hydrogen and oxygen are produced at a molecular ration of 2:1, and hydrogen is produced in a form of bubble from the surface of the electrode (-), and oxygen is produced in a form of bubble from the surface of the electrode (+). The produced hydrogen and oxygen are mixed and become a mixed gas which is combustible. In casing of burning, any pollutants are not produced, so the hydrogen and oxygen gases are considered as an environment friendly energy source.

The applicant of the present invention has tried to apply such hydrogen and oxygen mixed gas generation apparatus to a vehicle for thereby generating hydrogen and oxygen mixed gas and has researched to use the same as a fuel for driving an engine.

In order to generate a mixed gas of hydrogen and oxygen, it is needed to supply a couple of tens to hundreds of amperes to the electrodes (-) and (+). However, it seems difficult for the battery or generator installed in the vehicle to receive such currents.

From US 6 434 936 B1 it is known to generate electricity from exhaust gases.

### DISCLOSURE OF THE INVENTION

Accordingly, it is an object of the present invention to provide a vehicle power generation system using exhaust gas which is able to generate an electric energy using exhaust gas of a vehicle for the use of generating a mixed gas of hydrogen and oxygen.

To achieve the above objects, there is provided a vehicle power generation system using exhaust gas which comprises a casing 10 which is installed at a vehicle chassis and is formed of an inlet hole 11 for inputting an exhaust gas and an outlet hole 12 for discharging an exhaust gas; a turbine 20 which is rotatably installed in the interior of the casing 10 and rotates by means of a pressure of the exhaust gas inputted into the inlet hole 11; a power generator 30 which has a rotatary shaft 31 axially engaged to a shaft part 21 of the turbine 20 passing through a front side of the casing 10; and a fixing bracket 40 for fixing the power generator 30 to the casing 10, wherein said inlet hole 11 is obliquely formed at a side portion of a front side of the casing 10, and said turbine 20 includes a shaft part 21 rotatably engaged to a bearing installed in the front and rear sides of the casing 10 and a wing assembly 22 rotated by a pressure of the exhaust gas inputted into the inlet hole 11, and said wing assembly 22 includes a plurality of wing disks 23 with a plurality of latch wings 23a being opposite to the inlet hole 11, and said wing assembly 22 is partitioned by a partition disk 24' of a front side after the wing disks 23 are stacked in the direction of the inlet hole 11, and a plurality of wing disks 23 are stacked at the side of the inlet hole 12, and it is partitioned at the partition disk 24" of the rear side, and a plurality of partition disks partition a plurality of wings stacked between the partition disk 24' of the font side and the partition disk 24" of the rear side, and in the stacked wing disks 23, said latch wings 23a are arranged in a spiral shape, and holes 24a and 24b formed in the partition disks 24, 24' and 24" are disposed between the latch wings 23a in spiral shapes.

There are further provided a plurality of radiation fins 15 formed on an outer surface of the casing 10 for externally radiating the heat generated by means of a high speed rotation of the turbine 20.

### EFFECTS

According to the vehicle electric power generation system using an exhaust system of the present invention, it is possible to generate electric power using exhaust gas without using an additional energy input since a turbine is rotated by means of an exhaust gas discharged from an engine, and the electric power is generated as the turbine drives the electric power generator.

In addition, since the turbine is formed of a plurality of wing disks equipped with latch wings being opposite to a plurality of inlet holes, so the turbine can be efficiently rotated by means of the exhaust gas, so that the electric power generator can be effectively driven for thereby generating a lot of electric power energy.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view of a vehicle power generation system using exhaust gas according to the present invention;
Figure 2 is a front view of a wing disk belonging to a turbine of Figure 1;
Figure 3 is a front view of a partition disk belonging to a turbine of Figure 1;
Figure 4 is a view for explaining an inlet hole and a wing disk obliquely formed at a side portion of a casing in Figure 1;
Figure 5 is a side view of a turbine of Figure 1.

### <Description of reference numerals of key elements in the drawings>

- 10: casing: 11: inlet hole
- 12: outlet hole: 13: bracket
- 15: radiation fin: 20: turbine
- 21: shaft part: 22: wing assembly
- 23: wing disk: 23a: latch wing
- 24: partition disk: 24a, 24b: hole
- 30: power generator: 40: fixing bracket

### MODES FOR CARRYING OUT THE INVENTION

The vehicle power generation system using exhaust gas according to the present invention will be described with reference to the accompanying drawings.

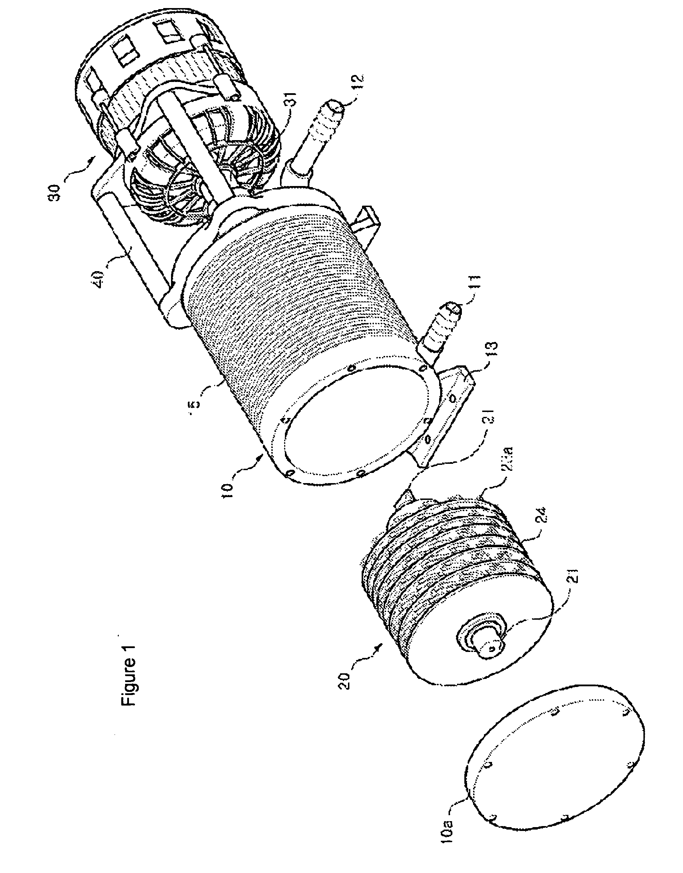

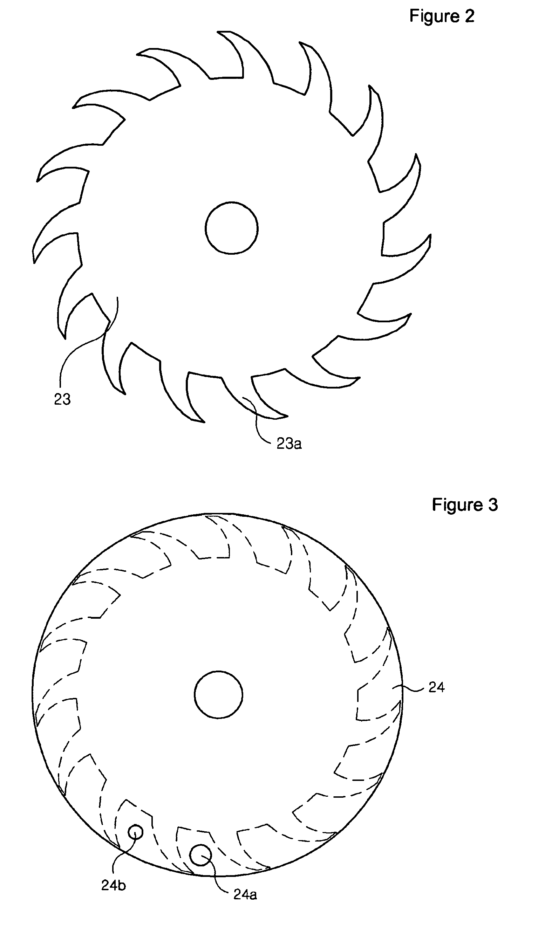

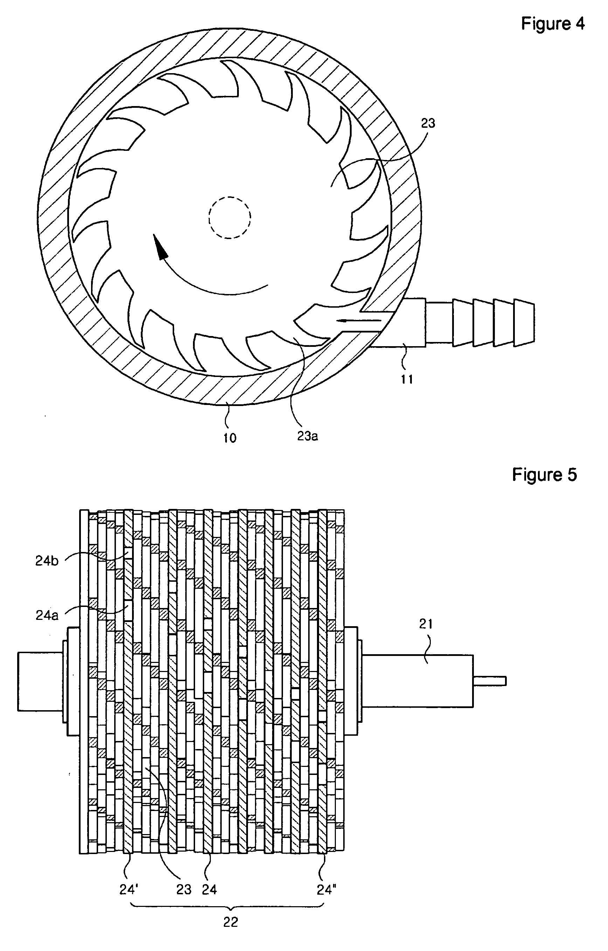

Figure 1 is a perspective view of a vehicle power generation system using exhaust gas according to the present invention; Figure 2 is a front view of a wing disk belonging to a turbine of Figure 1; Figure 3 is a front view of a partition disk belonging to a turbine of Figure 1; Figure 4 is a view for explaining an inlet hole and a wing disk obliquely formed at a side portion of a casing in Figure 1; and Figure 5 is a side view of a turbine of Figure 1.

As shown therein, the vehicle power generation system using exhausting gas according to the present invention is installed a chassis of a vehicle, which includes a casing 10 which is installed at a vehicle chassis and is formed of an inlet hole 11 for inputting an exhaust gas and an outlet hole 12 for discharging an exhaust gas; a turbine 20 which is rotatably installed in the interior of the casing 10 and rotates by means of a pressure of the exhaust gas inputted into the inlet hole 11; a power generator 30 which has a rotary shaft 31 axially engaged to a shaft part 21 of the turbine 20 passing through a front side of the casing 10; and a fixing bracket 40 for fixing the power generator 30 to the casing 10. The casing 10 is formed in a cylindrical shape which is fixed to a fixing part of a chassis of a vehicle. As shown in Figures 1 and 4, an inlet hole 11 is obliquely formed in a side portion of a front side of the casing 10 for inputting exhaust gas, and an outlet hole 12 is formed in a rear side of the casing 10 for discharging exhaust gas which has been used for rotating the turbine 20. Since the inlet hole 11 is obliquely formed, so the exhaust gas inputted into the inlet hole 11 can effectively rotate the turbine 20. At this time, the inlet hole 11 is connected with a muffler which finally discharges exhaust gas, and the outlet hole 12 is connected with an additional pipe. Here, the inlet hole 11 might be connected with an exhaust manifold which exhausts exhaust from engine, and the outlet hole 12 may be connected with muffler. A bracket 13 is formed in the casing 10 and is engaged by means of a bolt and a nut to be fixed to a chassis of a vehicle. A plurality of radiation fins 15 are formed in an outer surface of the casing 10 for radiating heat which is generated by means of a high speed rotation of a turbine 20. Here, the radiation fins 15 can be integrally formed when forming the casing 10 in a cylindrical shape or can be separately formed and engaged to the casing 10. The turbine 20 includes a shaft part 21 rotatably engaged to a bearing(not shown) installed in the front and rear sides of the casing 10, and a wing assembly 22 which is engaged to the shaft part 21 and rotates by means of a pressure of the exhaust gas inputted into the inlet hole 11. The wing assembly 22 may be formed in various forms, and in the embodiment of the present invention, the wing assembly 22 includes a plurality of wing disks 23 with a plurality of latch wings 23a being opposite to the direction of the inlet hole 11, and a partition disk 24 which partitions the wing disk 23 and other wing disk 23'. As shown in Figure 4, the front side of the latch 23a formed in the wing disk 23 is formed in a latch shape toward the inlet hole 11 for an easier rotation by means of an exhaust gas inputted into the inlet hole 11, and the rear side of the same is obliquely formed. In addition, a plurality of holes are formed in the partition disk 24 for discharging exhaust gas, and two holes 24a and 24b are preferably formed for easier description of the present invention. It is preferred that the holes 24a and 24b are obliquely formed when the thickness of the partition disk 24 is thick, and the inclination direction is toward the rotation direction of the turbine. The wing assembly is constituted in a structure that a plurality of wing disks 23 and a plurality of partition disks 24 are stacked in the shaft part 21. In the present embodiment, the wing assembly 22 is partitioned by means of the partition disk 24' of the front side in which four wing disks 23 are stacked in the direction of the inlet hole 11, and two wing disks 23 are stacked in the side of the outlet hole 12 and are partitioned by the partition disk 24" of the rear side, and a plurality of partition disks partition a plurality of wing disks stacked between the partition disk 24' of the front side and the partition disk 24" of the rear side partition. At this time, in the wing disks 23 stacked, the latch wings 23a are arranged in spiral shape, and the holes 24a and 24b formed in the partition disks 24, 24' and 24" partitioning the wing disks are arranged in spiral shapes between the latch wings 23a. With the structure of the turbine 20, the exhaust gas inputted into the inlet hole 11 pushes and rotates the latch wings 23a disposed as being opposite and in spiral shapes, and the exhaust gas is discharged through the outlet hole 12 through the holes 24a and 24b and the latch wing 23a formed in the partition disk 24 arranged in spiral shape. Namely, the exhaust gas pushes the latch wings 23a disposed in a spiral shape and passes through the other latch wings and the spiral holes 24a and 24b of the partition disk and pass through the outlet hole 12 for thereby effectively rotating the turbine 20. The rotating turbine 20 rotates the rotor of the power generator 20 for thereby producing a lot of electric power. The fixing bracket 40 integrally fixes the power generator 30 to the casing 10. With the above structure, the exhaust gas discharged from the engine is inputted into the interior of the casing 10 through the inlet holes 11 for thereby rotating the turbine 20, and the turbine 20 generates a lot of power as the turbine 20 drives the power generator 30. The generated electric power is supplied to the electrodes of the apparatus for generating a mixed gas of hydrogen and oxygen for the use of water electrolysis.

The present invention has been described with reference to the embodiments disclosed in the drawings, which is for the illustrative purpose, and those who skilled in the art can change and modify the disclosed inventions.

## Claims

1. A vehicle power generation system using exhaust gas, comprising:
a casing (10) which is installed at a vehicle chassis and is formed of an inlet hole (11) for inputting an exhaust gas and an outlet hole (12) for discharging an exhaust gas;
a turbine (20) which is rotatably installed in the interior of the casing (10) and rotates by means of a pressure of the exhaust gas inputted into the inlet hole (11);
a power generator (30) which has a rotary shaft (31) axially engaged to a shaft part (21) of the turbine (20) passing through a front side of the casing (10); and
a fixing bracket (40) for fixing the power generator (30) to the casing (10),
wherein said inlet hole (11) is obliquely formed at a side portion of a front side of the casing (10), and said turbine (20) includes a shaft part (21) rotatably engaged to a bearing installed in the front and rear sides of the casing (10) and a wing assembly (22) rotated by a pressure of the exhaust gas inputted into the inlet hole (11), and said wing assembly (22) includes a plurality of wing disks (23) with a plurality of latch wings (23a) being opposite to the inlet hole (11), and said wing assembly (22) is partitioned by a partition disk (24') of a front side after the wing disks (23) are stacked in the direction of the inlet hole (11), and a plurality of wing disks (23) are stacked at the side of the inlet hole (12), and it is partitioned at the partition disk (24") of the rear side, and a plurality of partition disks partition a plurality of wings stacked between the partition disk (24') of the font side and the partition disk (24") of the rear side, and in the stacked wing disks (23), said latch wings (23a) are arranged in a spiral shape, and holes (24a and 24b) formed in the partition disks (24, 24' and 24") are disposed between the latch wings (23a) in spiral shapes.

2. The system of claim 1, further comprising a plurality of radiation fins (15) formed on an outer surface of the casing (10) for externally radiating the heat generated by means of a high speed rotation of the turbine (20).

## Patentansprüche

1. Fahrzeug-Stromerzeugungssystem unter Verwendung von Auspuffgas, wobei das System Folgendes umfasst:
ein Gehäuse (10), das an einem Fahrzeugchassis installiert und mit einer Einlassöffnung (11) zum Zuführen eines Auspuffgases und einer Auslassöffnung (12) zum Ausstoßen eines Auspuffgases ausgebildet ist;
eine Turbine (20), die drehbar im Inneren des Gehäuses (10) installiert ist und sich mittels eines Drucks des in die Einlassöffnung (11) zugeführten Auspuffgases dreht;
einen Stromerzeuger (30) der eine Radialwelle (31) aufweist, die axial mit einem Wellenteil (21) der Turbine (20) im Eingriff steht, das durch eine Vorderseite des Gehäuses (10) hindurch geht; und
eine Befestigungshalterung (40) zum Befestigen des Stromerzeugers (30) an dem Gehäuse (10),
wobei die Einlassöffnung (11) schräg an einem Seitenabschnitt einer Vorderseite des Gehäuses (10) ausgebildet ist und die Turbine (20) ein Wellenteil (21), das drehbar mit einem Lager im Eingriff steht, das in der Vorderseite und der Rückseite des Gehäuses (10) installiert ist, und eine Flügeleinheit (22) umfasst, die von einem Druck des in die Einlassöffnung (11) zugeführten Auspuffgases gedreht wird, und wobei die Flügeleinheit (22) mehrere Flügelscheiben (23) mit mehreren Sperrflügeln (23a) umfasst, die der Einlassöffnung (11) gegenüberliegen, und wobei die Flügeleinheit (22) durch eine Unterteilscheibe (24') einer Vorderseite unterteilt wird, nachdem die Flügelscheiben (23) in der Richtung der Einlassöffnung (11) gestapelt wurden, und sie an der Unterteilscheibe (24'') der Rückseite unterteilt wird, und wobei mehrere Unterteilscheiben mehrere Flügel unterteilen, die zwischen der Unterteilscheibe (24') der Vorderseite und der Unterteilscheibe (24") der Rückseite gestapelt sind, und wobei die Sperrflügel (23a) in den gestapelten Flügelscheiben (13) in einer Spiralform angeordnet sind und Öffnungen (24a und 24b), die in den Unterteilscheiben (24, 24' und 24 ") ausgebildet sind, zwischen den Flügelscheiben (23a) in Spiralformen positioniert sind.

2. System nach Anspruch 1, das weiterhin mehrere Abstrahlrippen (15), die auf einer Außenfläche des Gehäuses (10) ausgebildet sind, zum externen Abstrahlen der mittels einer Hochgeschwindigkeitsdrehung der Turbine (20) erzeugten Wärme umfasst.

## Revendications

1. Système générateur de puissance de véhicule utilisant le gaz d'échappement, comprenant :
un boîtier (10) qui est installé sur un châssis de véhicule et est formé avec un trou d'entrée (11) pour l'entrée d'un gaz d'échappement et un trou de sortie (12) pour l'évacuation d'un gaz d'échappement ;
une turbine (20) qui est installée de manière rotative à l'intérieur du boîtier (10) et tourne au moyen d'une pression du gaz d'échappement entré dans le trou d'entrée (11) ;
un générateur de puissance (30) qui a un arbre rotatif (31) engagé de manière axiale avec une partie arbre (21) de la turbine (20) passant à travers un côté avant du boîtier (10) ; et
un support de fixation (40) pour la fixation du générateur de puissance (30) au boîtier (10),
ledit trou d'entrée (11) étant formé de manière oblique à une partie latérale d'un côté avant du boîtier (10), et ladite turbine (20) comprenant une partie arbre (21) engagée de manière rotative avec un palier installé dans les côtés avant et arrière du boîtier (10) et un ensemble aile (22) amené à tourner par une pression du gaz d'échappement entré dans le trou d'entrée (11), et ledit ensemble aile (22) comprenant une pluralité de disques à ailes (23) ayant une pluralité d'ailes de verrouillage (23a) qui sont opposées au trou d'entrée (11), et ledit ensemble aile (22) étant séparé par un disque de séparation (24') d'un côté avant après que les disques à ailes (23) ont été empilés dans la direction du trou d'entrée (11), une pluralité de disques à ailes (23) étant empilés du côté du trou d'entrée (12), et étant séparé au disque de séparation (24") du côté arrière, et une pluralité de disques de séparation séparant une pluralité d'ailes empilées entre le disque de séparation (24') du côté avant et le disque de séparation (24") du côté arrière, et, dans les disques à ailes empilés (23), lesdites ailes de verrouillage (23a) étant agencées en une forme de spirale, et des trous (24a et 24b) formés dans les disques de séparation (24, 24' et 24") étant disposés entre les ailes de verrouillage (23a) en formes de spirale.

2. Système selon la revendication 1, comprenant en outre une pluralité d'ailettes de rayonnement (15) formées sur une surface externe du boîtier (10) pour rayonner sur l'extérieur la chaleur générée au moyen d'une rotation à grande vitesse de la turbine (20).
